# EUROPÄISCHE PATENTANMELDUNG

(11) **EP 0 557 849 A2**
(43) Veröffentlichungstag der Anmeldung: **01.09.1993**
(21) Anmeldenummer: 93102351.9
(22) Anmeldetag: 15.02.1993
(51) Int. Cl.: H04Q 11/04, H04M 11/06, H04M 3/00

(54) **Verfahren zum Transport von D-Kanal Paketdaten in ISDN-Nebenstellenanlagen**

(30) Priorität: 24.02.1992 DE 4205554
(71) Anmelder: SIEMENS AKTIENGESELLSCHAFT, D-80333 München (DE)
(72) Erfinder: Schreiber, Harald, Dipl.-Ing., W-4796 Salzkotten (DE)

(57) **Zusammenfassung**

Die Erfindung betrifft ein Verfahren zum Transport von D-Kanal Paketdaten in ISDN-Nebenstellenanlagen (10), mit Teilnehmeranschlußschaltungen (16) zum Anschluß von Teilnehmerstationen (12) an ein B-Kanal-Koppelfeld (18) bei dem die D-Kanal Paketvermittlungsinformationen in der Teilnehmeranschlußschaltung von den D-Kanal Signalisierungsinformationen (24) getrennt werden und der Transport der D-Kanal Paketdaten über mindestens einen vorbestimmten Übertragungskanal des B-Kanal-Koppelfeldes mit Mehrfachzugriffsmöglichkeit nach Art eines LAN erfolgt.

## Beschreibung

Die Erfindung betrifft ein Verfahren zum Transport von D-Kanal Paketdaten in ISDN-Nebenstellenanlagen, mit Teilnehmeranschlußschaltungen zum Anschluß von Teilnehmerstationen an ein B-Kanal-Koppelfeld.

ISDN-Netze sind nach den CCITT ISDN-Empfehlungen der Reihe I.110 bis I.464 organisiert. Bei ISDN-Teilnehmeranschlüssen besteht danach die Möglichkeit neben den beiden B-Kanälen auch den D-Kanal zur Datenübertragung zwischen zwei Teilnehmern zu verwenden. Dazu teilen sich die Paketvermittlungsinformation p und die Signalisierungsinformation s in die Nutzung der physikalischen Übertragungskapazität des D-Kanals. Dies geschieht in Schicht 2 des ISO-Schichtenmodels nach dem Adressen-Multiplex-Verfahren durch Unterscheidung im HDLC-Adreßfeld: Service Access Point Identifier SAPI = "p" bzw. SAPI = "s".

Das Signalisierungsnetz innerhalb einer Nebenstellenanlage ist nicht für paketvermittelten Datenverkehr geeignet, da es durch diesen Datenverkehr zu stark belastet würde. Paketvermittlungsinformationen sollten daher möglichst nicht über das Signalisierungsnetz übertragen werden.

Es ist Aufgabe der Erfindung ein Verfahren zum Transport von S-Kanal Paketdaten anzugeben, das eine möglichst weitgehende Trennung von Signalisierungsinformationen und Paketvermittlungsinformationen bei möglichst guter Ausnutzung der Vermittlungskapazität der ISDN-Nebenstellenanlage ermöglicht.

Diese Aufgabe löst die Erfindung dadurch, daß die D-Kanal Paketvermittlungsinformationen in der Teilnehmeranschlußschaltung von den D-Kanal Signalisierungsinformationen getrennt werden und der Transport der D-Kanal Paketdaten über mindestens einen vorbestimmten Übertragungskanal des B-Kanal-Koppelfeldes mit Mehrfachzugriffsmöglichkeit nach Art eines LAN erfolgt.

Da die Teilnehmeranschlußschaltung bereits erste Signalisierungsinformationen selbst auswerten bzw. an die Vermittlungssteuerung übertragen muß, sind an dieser Stelle bereits Mittel vorhanden, den Inhalt des D-Kanals auszuwerten. Diese Auswertung kann dahingehend erweitert werden, daß auch die Trennung in Paketvermittlungsinformationen und Signalisierungsinformationen bzw. Zusammenführung von Paketvermittlungsinformationen und Signalisierungsinformationen in der Teilnehmeranschlußschaltung erfolgt. Mit dieser Trennung bzw. Zusammenführung direkt in der Teilnehmeranschlußschaltung wird verhindert, daß Paketvermittlungsinformationen im weiteren Signalisierungsnetz der ISDN-Nebenstellenanlage übertragen werden müssen.

Zum Transport der Paketvermittlungsinformationen wird ein Übertragungskanal im B-Kanal-Koppelfeld der ISDN-Nebenstellenanlage verwendet, der Mehrfachverbindungen ermöglicht. Wie solche Übertragungskanäle in einem B-Kanal-Koppelfeld mit den Eigenschaften eines LAN in einer Nebenstellenanlage realisiert werden können, kann aus der DE 38 08 647 C2, der DE 39 12 333 C2 und der DE 40 23 032 A1 für verschiedene Realisierungsvarianten des B-Kanal-Koppelfeldes entnommen werden.

Bei diesen Realisierungsvarianten von B-Kanal-Koppelfeldern, die Mehrfachverbindungen mit den Eigenschaften eines LAN ermöglichen, kann ein Zugriffsverfahren auf den gemeinsamen Übertragungskanal vorgesehen werden, das zu Zeitverzögerungen im Transport der Daten führt. Um diese Verzögerungszeiten zu überbrücken werden die D-Kanal Paketdaten in Pufferspeichern der Teilnehmeranschlußschaltung zur zeitrichtigen Übertragung zwischengespeichert.

Zum Übergang auf andere Übertragungsmedien wie beispielsweise Ethernet-LAN oder eine andere Telekommunikationsanlage über eine PCM-Verbindung kann mindestens ein Übertragungskanal mit Mehrfachverbindungsmöglichkeit mit einem Packet-Handler verbunden sein.

Im folgenden wird die Erfindung an Hand eines Ausführungsbeispiels näher erläutert. Es zeigen:
- Fig.1: ein Blockschaltbild einer ISDN-Nebenstellenanlage,
- Fig.2: ein Blockschaltbild einer Teilnehmeranschlußschaltung zur Durchführung des erfindungsgemäßen Verfahrens.

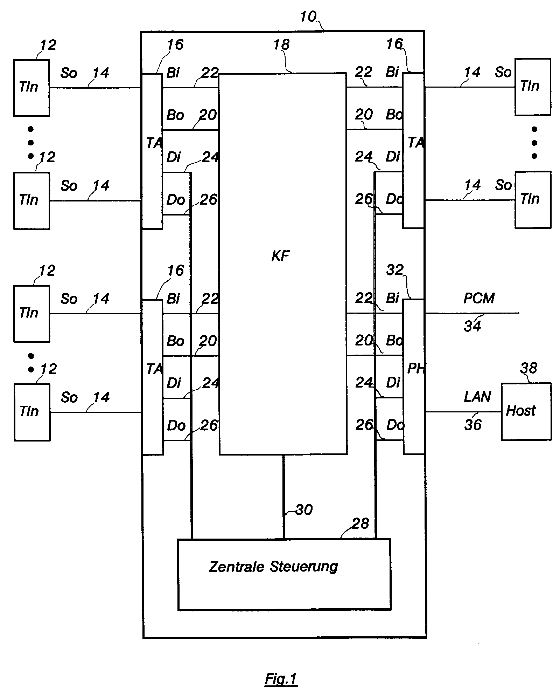

Fig.1 zeigt ein Blockschaltbild einer ISDN-Nebenstellenanlage 10, an die Teilnehmerstationen 12 über Teilnehmeranschlußleitungen 14 angeschlossen sind.

Die Teilnehmerstationen 12 sind so ausgebildet, daß auf dem D-Kanal-Paketvermittlungsinformationen für eine Datenübertragungsverbindung zu einer anderen Teilnehmerstation 12 oder einem Rechner 38 gesendet bzw. von dort empfangen werden können, der über ein LAN 36 mit der ISDN-Nebenstellenanlage 10 verbunden ist.

Zur phsikalischen Schnittstellenanpassung sowie zur Trennung der B-Kanäle von den D-Kanälen erfolgt der Anschluß der Teilnehmeranschlußleitungen 14 über Teilnehmeranschlußschaltungen 16. Das LAN 36 ist über einen Packet-Handler 32 angeschlossen, der über einen weiteren Anschluß mit einer PCM-Verbindung 34 an eine nicht dargestellte zweite ISDN-Nebenstellenanlage oder ISDN-Vermittlungsstelle angeschlossen sein kann. Teilnehmeranschlußschaltung 16 und Packet-Handler 32 können auf einer Zeitmultiplexleitung 20 B-Kanal-Daten zu einem Koppelfeld 18 senden und auf einer zweiten Zeitmultiplexleitung 22 B-Kanal-Daten vom Koppelfeld 18 empfangen.

Zur Verbindungssteuerung mittels Signalisierungsinformationen sind die Teilnehmeranschlußschaltungen 16 und der Packet-Handler 32 über Steuerleitungen 24, 26 mit einer Zentralen Steuerung 28 verbunden, die ihrerseits über eine Steuerverbindung 30 das Koppelfeld 18 zur Schaltung von Übertragungskanälen zwischen den Zeitmultiplexleitungen 20,22 ansteuert.

Im B-Kanal-Koppelfeld ist mindestens ein Übertragungskanal für Mehrfachverbindungen vorgesehen und beispielsweise bereits allen an das B-Kanal-Koppelfeld angeschlossenen Teilnehmeranschlußschaltungen und Packet-Handlern bei der Initialisierung der ISDN-Nebenstellenanlage bekanntgemacht worden.

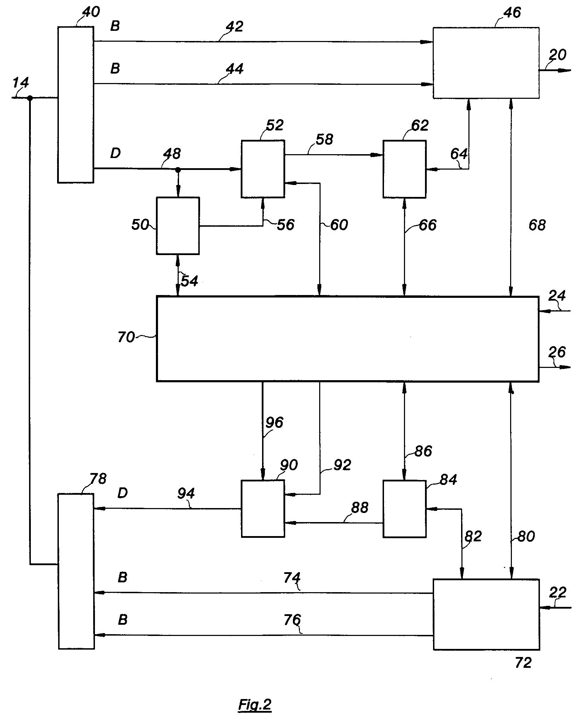

Fig.2 zeigt ein Blockschaltbild einer Teilnehmeranschlußschaltung 16 zur Durchführung des erfindungsgemäßen Verfahrens. Die Teilnehmeranschlußleitung 14 ist mit einem Demultiplexer 40 verbunden, der die beiden B-Kanäle und den D-Kanal separiert. Über Verbindungen 42, 44 gelangen die Daten der B-Kanäle zu einer Zugriffschaltung 46, deren Ausgang mit der Zeitmultiplexleitung 20 verbunden ist, die zum Koppelfeld 18 (Fig.1) führt. In dieser Zugriffschaltung 46 werden zu bestimmten Sendezeitpunkten die B-Kanal-Daten des Teilnehmers zum B-Kanal-Koppelfeld hin übertragen.

Die D-Kanal Daten aus dem Demultiplexer 40 gelangen über eine Verbindung 48 an eine Vergleichseinrichtung 50 und eine Umschalteinrichtung 52. Die Vergleichseinrichtung 50 ist so ausgebildet, daß sie feststellen kann, ob es sich bei den ankommenen D-Kanal-Daten um Signalisierungsinformationen oder Paketvermittlungsinformationen handelt. Dazu ist sie über eine Verbindung 54 mit einer Steuerung 70 der Teilnehmeranschlußschaltung 16 verbunden, die der Vergleichseinrichtung 50 die zur Unterscheidung notwendigen Informationen liefert, und über die das Eintreffen von Signalisierungsinformationen und Paketvernittlungsinformationen zurückgemeldet werden kann.

Zur Verbindungssteuerung und zum Austausch von Signalisierungsinformationen ist die Steuerung 70 über die Steuerleitungen 24, 26 mit der zentralen Steuerung 28 (Fig.1) der ISDN-Nebenstellenanlage verbunden.

Über eine Verbindung 56 steuert die Vergleichseinrichtung 50 die Umschalteinrichtung 52 so an, daß Signalisierungsinformationen über eine Verbindung 60 an die Steuerung 70 weitergeleitet werden und Paketvermittlungsinformationen über eine Verbindung 58 zu einem Zwischenspeicher 62 gelangen. Aus diesem Zwischenspeicher 62 können die Paketvermittlungsinformationen über eine Verbindung 64 zur Zugriffsschaltung 46 auf Anforderung weitergereicht werden, von wo aus sie zum richtigen Sendezeitpunkt auf die Zeitmultiplexleitung 20 übertragen werden.

Über eine Verbindung 68 ist die Zugriffsschaltung 46 mit der Steuerung 70 verbunden, der die Zugriffsschaltung 46 die Sendezeitpunkte und Sendeberechtigung mitteilt. Die Zugriffssteuerung auf die Zeitmultiplexleitung erfolgt innerhalb der Zugriffsschaltung 46, insbesondere das Zugriffsprotokoll für den Übertragungskanal mit Mehrfachbelegungsmöglichkeit wird bereits von dieser Schaltung abgehandelt.

D-Kanal-Paketvermittlungsinformationen werden also von der Vergleichseinrichtung 50 erkannt und mittels der Umschalteinrichtung 52 in einen Zwischenspeicher 62 geladen, von wo aus sie über die Zugriffsschaltung 46 auf einen Übertragungskanal mit Mehrfachbelegungsmöglichkeit des B-Kanal-Koppelfeldes gesendet werden.

Die Steuerung 70 der Teilnehmeranschlußschaltung 16 und das nachfolgende Signalisierungsnetz (24, 26,28) werden damit nicht mit D-Kanal-Paketvermittlungsinformationen belastet.

Auf der Empfangsseite ist eine zweite Zugriffsschaltung 72 mit der Zeitmultiplexleitung 22 verbunden. Über eine Verbindung 80 zur Steuerung 70 der Teilnehmeranschlußschaltung werden die von der Steuerung der ISDN-Nebenstellenanlage vergebenen Empfangszeitpunkte an eine Zugriffsschaltung 72 übertragen. Über zwei Verbindungen 74, 76 gelangen die ankommenden Daten der beiden regulären B-Kanäle zu einem Multiplexer 78, dessen Ausgang mit der Teilnehmeranschlußleitung 14 verbunden ist.

Die Daten des B-Kanals mit Mehrfachbelegungsmöglichkeit gelangen über eine Verbindung 82 zu einem Eingangszwischenspeicher 84, der über eine Verbindung 86 der Steuerung 70 das Eintreffen von Paketvermittlungsinformationen meldet, die über den D-Kanal der Teilnehmeranschlußleitung übertragen werden sollen. Über eine Verbindung 88 können diese zwischengespeicherten Paketvermittlungsinformationen in eine Vormultiplexer 90 eingelesen werden. Über einen weiteren Eingang werden in diese Vormultiplexer 90 über eine Verbindung 92 Signalisierungsinformationen, die von der Steuerung 70 zur Teilnehmerstation übertragen werden sollen, eingelesen. Die für die Zusammenführung von Signalisierungsinformationen und Paketvermittlungsinformationen erforderlichen Informationen werden von der Steuerung 70 über eine Verbindung 96 übertragen. Die zusammengeführten D-Kanal-Daten werden über eine Verbindung 94 an den Multiplexer 78 abgegeben, von wo aus sie zur Teilnehmerstation übertragen werden. Auch dieser Empfang von D-Kanal-Paketvermittlungsinformationen belastet das Signalisierungsnetz der ISDN-Nebenstellenanlage nicht.

## Patentansprüche

1. Verfahren zum Transport von D-Kanal Paketdaten in ISDN-Nebenstellenanlagen, mit Teilnehmeranschlußschaltungen zum Anschluß von Teilnehmerstationen an ein B-Kanal-Koppelfeld, **dadurch gekennzeichnet**, daß die D-Kanal Paketdaten in der Teilnehmeranschlußschaltung von den D-Kanal Signalisierungsdaten getrennt werden und der Transport der D-Kanal Paketdaten über mindestens einen vorbestimmten Übertragungskanal des B-Kanal-Koppelfeldes mit Mehrfachzugriffsmöglichkeit nach Art eines LAN erfolgt.

2. Verfahren nach Anspruch 1, **dadurch gekennzeichnet**, daß die D-Kanal Paketdaten in Pufferspeichern der Teilnehmeranschlußschaltung zwischengespeichert werden, die Verzögerungszeiten des Zugriffsverfahrens auf den Übertragungskanals mit Mehrfachzugriffsmöglichkeit überbrücken können.

3. Verfahren nach Anspruch 1 oder 2, **dadurch gekennzeichnet**, daß Übertragungskanäle mit Mehrfachzugriffsmöglichkeit mit einem Packet-Handler verbunden sind.

4. Schaltungsanordnung zur Durchführung des Verfahrens nach Anspruch 1 mit einer Teilnehmeranschlußschaltung (16) in der mittels Multiplexer (40) und Demultiplexer (78) eine Aufteilung bzw. Zusammenführung der beiden B-Kanäle und des D-Kanals erfolgt und die über Zugriffsschaltungen (46, 72) mit Zeitmultiplexleitungen (20,22) verbunden ist, **dadurch gekennzeichnet**, daß eine Umschalteinrichtung (52) von einer Vergleichseinrichtung (50) so angesteuert wird, daß D-Kanal-Signalisierungsinformationen zur Steuerung (70) der Teilnehmeranschlußschaltung gelangen und D-Kanal-Paketvermittlungsinformationen zu einem Zwischenspeicher (62), von dem aus sie über die Zugriffschaltung (46) auf die Zeitmultiplexleitung (20) gesendet werden, und daß ein Vormultiplexer (90) die D-Kanal-Daten für den Multiplexer (78) aus D-Kanal-Signalisierungsinformationen und D-Kanal-Paketvermittlungsinformationen bildet, die in einem Zwischenspeicher (84) abgelegt werden, dessen Eingangsdaten über die Zugriffschaltung (72) von der Zeitmultiplexleitung (22) empfangen werden.
